# EUROPEAN PATENT APPLICATION

(11) **EP 4 675 522 A1**
(43) Date of publication of application: **07.01.2026**
(21) Application number: 25186135.7
(22) Date of filing: 30.06.2025
(51) Int. Cl.: G06Q 10/02, G06Q 30/0251, G06Q 30/08, G06Q 50/40

(54) **IN-FLIGHT LIVE BIDDING SYSTEM**

(30) Priority: 02.07.2024 US 202418762306
(71) Applicant: Panasonic Avionics Corporation, Irvine, CA 92612 (US)
(72) Inventor: JAMES, Shiney, Irvine, 92612 (US); KAMAT, Sumeet, Irvine, 92612 (US); MATHUR, Vaibhav, Irvine, 92612 (US)
(74) Representative: Barker Brettell LLP

(57) **Abstract**

A method includes receiving bids from user devices including a first user device associated with a first bid by a passenger on the commercial passenger vehicle and processing the bids from the user devices based on a communication status of the commercial passenger vehicle. The method further comprises: determining whether to accept or reject the bids from the user devices based on predetermined rules; selecting the first bid associated with the first user device or any bid accepted by the second server, including a second bid by a non-passenger on the commercial passenger vehicle that is received by the first server from a second user device within a predetermined time window, as a winning bid based on the predetermined rules; and providing the winning bid information to the first server such that results of the selecting are distributed to the passenger or the non-passenger.

## Description

### CROSS-REFERENCE TO RELATED APPLICATIONS

This application claims the benefit of priority to U.S. Non-Provisional Patent Application No. 18/762,306 filed July 2, 2024. The content of the foregoing application is incorporated herein in its entirety by reference.

### TECHNICAL FIELD

This patent document relates to techniques to provide interactive application services to passengers of commercial passenger vehicles such as airplanes, passenger trains, buses, cruise ships, and others.

### BACKGROUND

Bidding auctions are a popular way for individuals to obtain commodities and services on offer for sale. In a typical bidding process, individuals make respective offers to purchase an item available for sale in an auction by placing a bid containing the price the individual is willing to pay for the item. Bidding auctions are found in a variety of contexts including commercial travel. For example, airlines commonly utilize bidding services to provide travelers an opportunity to bid on a seating assignment onboard an aircraft and the individual whose bids is selected as a winning bid is awarded the seating assignment. Thus, bidding platforms capable of managing numerous bids from many individuals interacting with the platform at various times can be designed and implemented in various applications.

### SUMMARY

This patent document describes exemplary systems and methods to provide interactive services of a common platform that is accessible to users that are passengers on a commercial passenger vehicle and users that are not passengers on the commercial passenger vehicle.

In one exemplary aspect, a system for providing bidding services to travelers on a commercial passenger vehicle is provided. The system comprises: a first server configured to receive bids and associated information from user devices based on bidding contents displayed by the user devices, the user devices including a first user device associated with a first bid by a passenger on the commercial passenger vehicle; a second server coupled to the first server and configured to control processing of bids from the user devices based on a communication status of the commercial passenger vehicle, the communication status determining, in part, which bids from the user devices are to be included in the processing, and wherein the second server is further configured to: determine whether to accept or reject bids from the user devices based on predetermined rules; select the first bid associated with the first user device or any bid accepted by the second server, including a second bid by a non-passenger on the commercial passenger vehicle that is accepted by the second server and received by the first server from a second user device within a predetermined time window, as a winning bid based on the predetermined rules; and provide, in response to the selecting, information associated with the winning bid to the first server such that results of the selecting are distributed to the passenger or the non-passenger.
In another exemplary aspect, a method of providing a bidding service to individuals traveling or seeking travel on one or more commercial passenger vehicles is provided. The method comprises: displaying biddable contents on user devices including a first user device associated with a passenger located onboard a first commercial passenger vehicle; receiving, by a server in communication with the user devices, data associated with a first bid from the first user device based on bidding contents being offered onboard a second commercial passenger vehicle in which the passenger is scheduled to travel aboard; synchronizing the data associated with the first bid with bid data received by the server from one or more user devices within a predetermined threshold of departure time of the second commercial passenger vehicle, the synchronized bid data including one or more bids from a second user device associated with an individual located outside the first commercial passenger vehicle; determining, by the server using the synchronized bid data, whether to select the first bid as a winning bid based on predetermined rules; and transmitting results of the determining to an additional server located onboard the second commercial passenger vehicle such that the bidding contents are provided to the passenger, the individual located outside the first commercial passenger vehicle, or a traveler located onboard the second commercial passenger vehicle. The first bid may be based on a recommendation presented by the first user device to the passenger in response to input received by the first user device regarding one or more bidding preferences of the passenger that include one or more of a preferred seating assignment onboard the second commercial passenger vehicle, a preferred seating class onboard the second commercial passenger vehicle, or a preferred arrangement of multiple seating assignments located in one or more seating classes onboard the second commercial passenger vehicle. The additional server may be configured to receive the first bid within the predetermined threshold of departure time of the second commercial passenger vehicle; and select, in response to the server determining not to select the first bid as the winning bid, the first bid or an additional bid from an additional passenger located onboard the second commercial passenger vehicle as the winning bid based on the predetermined rules. The method may further comprise: updating the bidding contents displayed on the user devices in response to the determining by the server to select the first bid as the winning bid. The first bid may be received by the server after the first commercial passenger vehicle has departed.

In another exemplary aspect, a method for providing bidding services to travelers on a commercial passenger vehicle is provided. The method comprises: receiving, by a first server, bids and associated information from user devices based on bidding contents displayed by the user devices, the user devices including a first user device associated with a first bid by a passenger on the commercial passenger vehicle; processing, by a second server coupled to the first server, the bids from the user devices based on a communication status of the commercial passenger vehicle, the communication status determining, in part, which of the bids from the user devices are to be included in the processing; determining, by the second server, whether to accept or reject the bids from the user devices based on predetermined rules; selecting the first bid associated with the first user device or any bid accepted by the second server, including a second bid by a non-passenger on the commercial passenger vehicle that is received by the first server from a second user device within a predetermined time window, as a winning bid based on the predetermined rules; and providing, in response to the selecting, information associated with the winning bid to the first server such that results of the selecting are distributed to the passenger or the non-passenger.

In yet another exemplary aspect, the above-described methods are embodied in the form of processor-executable code and stored in a non-transitory computer-readable program medium. The code included in the computer readable storage medium when executed by a processor, causes the processor to implement the methods described in this patent document.

In yet another exemplary aspect, the above-described systems are embodied in the form of processor-executable code and stored in a computer-readable program medium. The processor-executable code included in the computer-readable program medium when executed by a processor, causes the processor to implement the systems described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWINGS

FIG. 1 shows an exemplary bidding system installed in an airplane.
FIG. 2 shows an exemplary block diagram of a server included in an inflight bidding system.
FIG. 3 shows an exemplary block diagram of a payment process for a bidding system.
FIG. 4 shows an example bidding process of bidding systems.
FIG. 5 shows an example architecture of a bidding system.
FIG. 6 shows an example bidding system user interface.
FIG. 7 shows an example bidding system user interface.
FIG. 8 shows another example bidding system user interface.
FIG. 9 shows an example of some rule engine definitions implemented in bidding systems described herein.
FIG. 10 shows an example of bid data.
FIG. 11 shows an example flowchart of operations of bidding systems.
FIG. 12 shows another example flowchart of operations of bidding systems.

### DETAILED DESCRIPTION

In the commercial travel industry, revenue is commonly generated by offering items and upgrades for sale at competitive prices. For example, passengers intending to travel on a commercial passenger vehicle, such as an airplane, are typically provided an opportunity by the airline to place a bid on a seat upgrade. However, such bidding schemes often require bids to be placed within a narrow window of time prior to boarding of the airplane (e.g., 72+ hours ahead) and bidding participation is restricted to individuals who have already purchased travel fare onboard the airplane. Bidding services which allow for bidding participation from a more numerous population of travelers and which can be utilized by individuals even after an airplane has boarded or is in progress are highly desirable, as they may provide a revenue stream for commercial travel companies while also offering travelers an enhanced travel experience.

Described herein are example embodiments that provide a bidding service for use in an airplane. The technical solutions described in the present document can be embodied in implementations to improve a passenger experience, among other features. In some example embodiments, bidding activities and the reward of bidding contents can take place while the airplane is already in progress to a destination and may include bidding participation from individuals located onboard and outside the airplane. The example embodiments may also suggest recommended bids to participating bidders based, for example, on a seating assignment (e.g., window, middle, or aisle) or seating class onboard the airplane that is preferred by the bidder. In some example embodiments, individuals are not required to have already book travel fare onboard the airplane offering the bidding contents in order to participate in bidding. Some bidding services based on the disclosed technology allow passengers, while located onboard a first airplane already en route to a final destination, to place bids upon contents offered on one or more alternate airplanes on which the passenger is scheduled to travel. Among other features and benefits, the disclosed embodiments can be used to provide revenue to commercial travel companies through sales made on bidding contents such as unreserved or cancelled seating assignments.

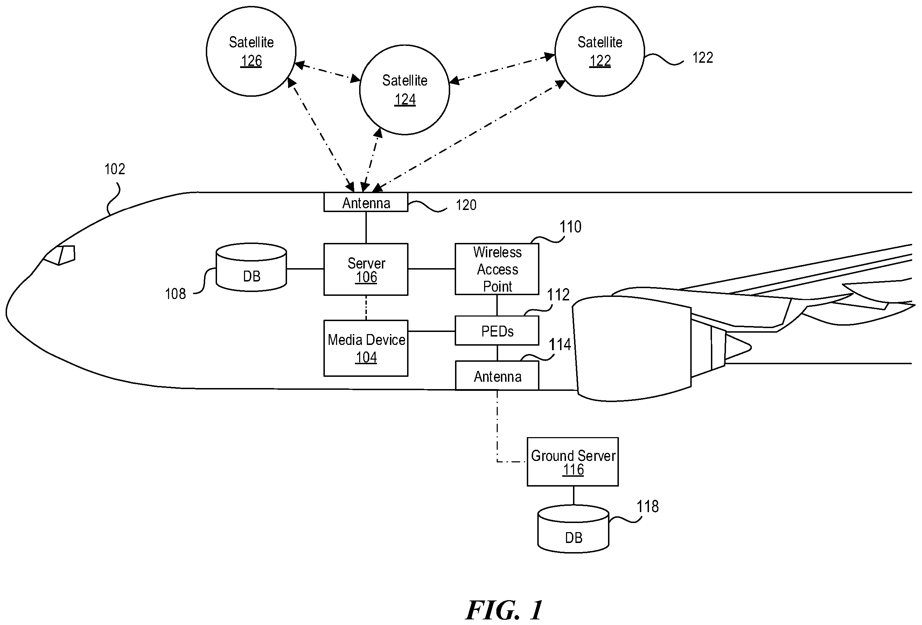

FIG. 1 shows an example of a bidding system for passengers in an airplane based on some implementations of the disclosed technology.

As an example, FIG. 1 shows an in-flight bidding system that includes a server 106, media devices 104, and PEDs (personal electronic device) that are located in the airplane 102. The components shown as a single element in FIG. 1, e.g., the server 106, the database 108, etc. can be configured in multiple elements. For example, the in-flight bidding system can include multiple servers and multiple databases to facilitate or support the providing of bidding options to the passengers. Most travelers carry PEDs having wireless communication capability, such as cellular phones, smart phones, tablet computers, laptop computers, and other portable electronic devices. Many of these PEDs have the capability to execute application software programs ("apps") to perform various functions, including controlling other devices and systems. For example, the PED 112 includes a marketplace software application to support the in-flight bidding services suggested in this patent document. The marketplace software application is configured to program the PED 112 to perform the required functionalities and operations of the PED as will be further described.

The server 106 is communicably coupled with the media devices 104 and the PEDs 112. The communication between the server 106 and the onboard devices including the media devices 104 and the PEDs 112 is either realized by wired connections or wireless connections. For example, the communication among the server 106, the media devices 104, and the PEDs 112 are achieved, e.g., in the case of mounted seat entertainment terminals or by a provision of network plugs at the seat for plugging PEDs 112 to a wired onboard local area network. In some other implementations, the communications among the server 106, the media devices 104, and the PEDs 112 are achieved, e.g., via a GSM/3G/4G cellular network utilizing one or more onboard base station(s), Wi-Fi such as the wireless access point 110, and/or by Bluetooth. Thus, the server 106, the media devices 104, and the PEDs 112 form a local network aboard the airplane 102. In some implementations, the network is an Ethernet switch but can be based on other networking standards. The in-flight bidding system can include an Ethernet switch unit which appropriately routes Ethernet frames carrying data and/or contents among the server 106, the monitors 104, and PEDs 112 on the network. The Ethernet switch unit may allow various Ethernet devices on the aircraft (e.g., the server 106, the media devices 104, the PEDs 112, etc.) to communicate with one another.

The server 106 is further communicatively coupled with a ground server 116 which is located outside the airplane 102, e.g., located in a computing center at an arbitrary location on the ground. The communication between the server 106 and the ground server 116 can utilize a wireless interface. For example, a satellite communication module and/or 3G/4G/5G transceiver module is mounted within the airplane 102 to which the server 106 is connected. The onboard server's connection to this communication module is realized via a wired line or, alternatively, via a wireless connection, e.g., by Wi-Fi. The communication module can also be attached to or integrated into the server 106. In the example of a satellite communication module, the communication module communicates via satellites 122, 124, and 126 (utilizing antennas 120 installed at the airplane 102) via one or more landline-based networks (WAN, Internet) to the ground server 116. In the example of a 3G/4G/5G transceiver module, the communication module communicates with a 3G/4G/5G mobile communication network on the ground which, in turn, connects the server 106 through potentially further landline-based networks (WAN, Internet) to the ground server 116.

The media devices 104 are configured to provide access to the marketplace application, communication applications, internet browsing, and other computer applications, etc. In some implementations, the media devices 104 may be provided at each passenger seat such as mounted at each of the seatbacks of the passenger seats or above each of the passenger seats and allow each passenger to place bids on contents available for purchase in the marketplace application. The in-flight bidding system can send bidding contents (e.g., seat upgrades, flight tickets, concert tickets, games, theme park tickets, etc.) to displays of the media devices 104 and the media devices 104 can send the bidding information and payment credential information of the passenger to the in-flight bidding system for processing and selection of a winning bid. In some implementations, the in-flight bidding system processes the bidding information based on a communication status between the server 106 and the ground server 116.

The ground server 116 may provide the server 106 with basic and updated user data and authentication results as will be further explained in detail later. In some implementations, the ground server 116 works as the source of the user data or operates as an interface to other servers and networks hosting the user data and authentical results. For example, the server 106 can obtain from the ground server 116 information about passengers and stores the obtained passenger information in the database 108. For example, when the airplane 102 is waiting at an airport to board passengers or while the passengers are boarding the airplane 102, the server 106 can obtain from the ground server 116 information about passengers that are located in or are expected to board the airplane.

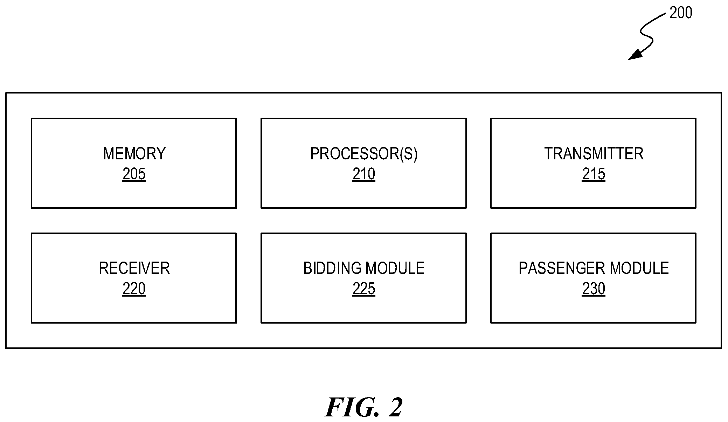

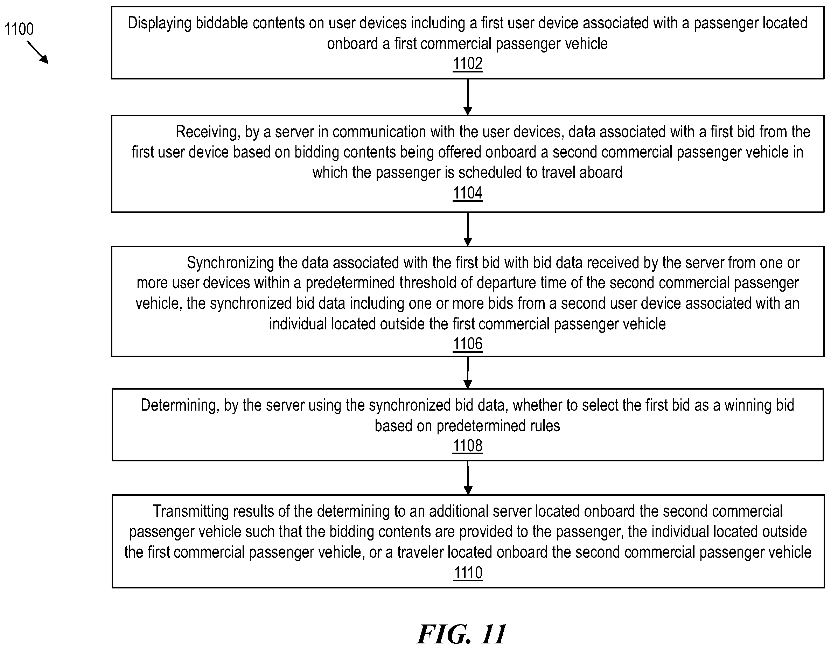

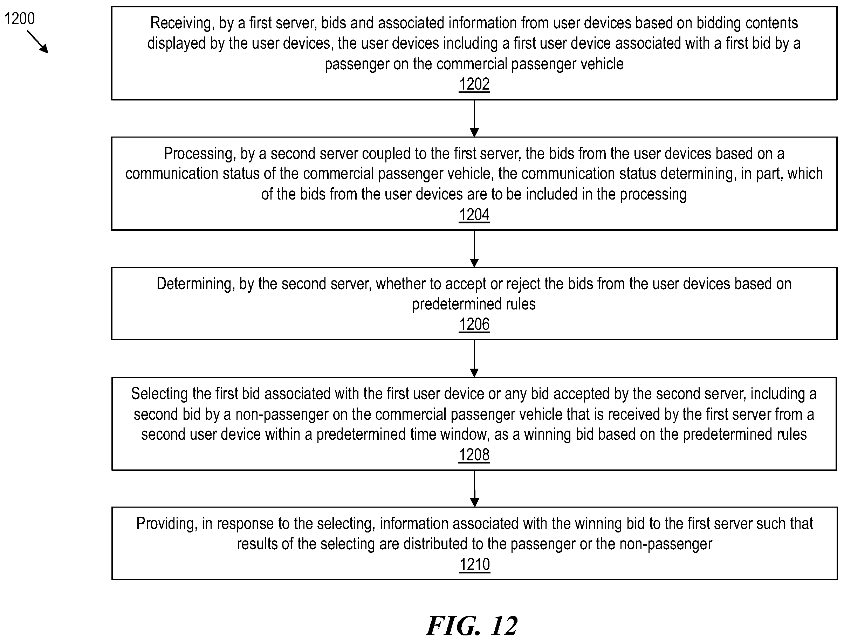

FIG. 2 shows an example block diagram of a server that is a part of an example in-flight bidding system. The server 200 includes at least one processor 210, a memory 205, a transmitter 215, a receiver 220, a bidding module 225, or a passenger module 230. The memory 205 may store instructions to be executed by the processor 210. In other embodiments, additional, fewer, and/or different elements may be used to configure the server 200. The memory 205 is an electronic holding place or storage for information or instructions so that the information or instructions can be accessed by the processor 210. The memory 905 can include, but is not limited to, any type of random access memory (RAM), any type of read only memory (ROM), any type of flash memory, etc. Such as magnetic storage devices (e.g., hard disk, floppy disk, magnetic strips, etc.), optical disks (e.g., compact disk (CD), digital versatile discs (DVD), etc.), smart cards, flash memory devices, etc. The instructions upon execution by the processor 210 configure the server 200 to perform the operations (e.g., the operations as shown in FIGS. 11 and 12) which will be described in this patent document. The instructions executed by the processor 210 may be carried out by a special purpose computer, logic circuits, or hardware circuits. The processor 210 may be implemented in hardware, firmware, software, or any combination thereof. The term "execution" is, for example, the process of running an application or the carrying out of the operation called for by an instruction. The instructions may be written using one or more programming language, scripting language, assembly language, etc. By executing the instruction, the processor 210 can perform the operations called for by that instruction.

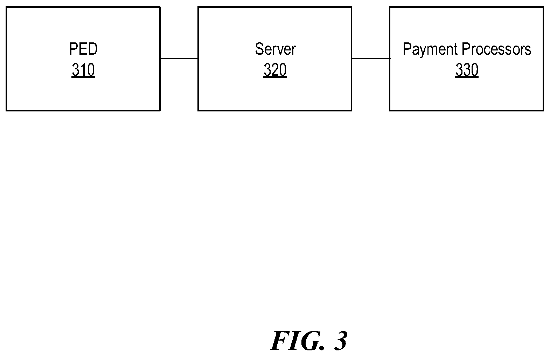

The processor 210 operably couples with the memory 204, transmitter, 214, the receiver, 220, the bidding module 225, and the passenger module 230, etc. to receive, to send, and to process information and to control the operations of the server 200. The processor 210 may retrieve a set of instructions from a permanent memory device such as a ROM device and copy the instructions in an executable form to a temporary memory device that is generally some form of RAM. In some implementations, the server 200 can include a plurality of processors that use the same or a different processing technology. The transmitter 215 transmits or sends information or data to another device (e.g., another server 116, media devices 104, or PEDs 112). The receiver 220 receives information or data transmitted or sent by another device (e.g., another server 116, media devices 104, or PEDs 112). The bidding module 225 of the server 200 is configured to perform operations to assist the bidding process and the payment process which will be further discussed with regards to FIGS. 3 to 5. In some implementations, the bidding module 225 can be configured as a part of the processor 210.

The passenger module 230 of the server 200 is configured to obtain information on passengers. Examples of passenger information include names, prior travel histories, current travel information, any preselected point of interests, interests, hobbies, passenger loyalty information, date of birth, age, gender, and contact. The passenger information can be obtained in multiple manners and stored in the bidding module 225. The passenger information can be obtained by the airlines and/or by a third-party prior to boarding of a corresponding passenger. In some implementations, if the passenger information was previously obtained and is stored in the relevant database, the server 200 can collect the passenger information from the relevant database. In some embodiments, for each flight, the ground server 116 may obtain names of the passengers that are expected to board the airplane 102 and information associated with the passengers. In some embodiments, for each flight, the ground server 116 may obtain names of the individuals that are seeking to board the airplane 102 but have not booked travel fare on the airplane 102 and information associated with the individuals.

In some embodiments, to use the bidding services using techniques disclosed in this patent document, a passenger may provide his or her payment information for a winning bid through a digital portal configured to support the bidding services. The digital portal can be an application software installed on and executed by the PED 310 shown in FIG. 3. Alternatively, the digital portal may be provided by the airlines to the passenger for the travel. Alternatively, the digital portal may be a field re-programmable chip card. FIG. 3 shows an example diagram to explain a payment process based on some implementations of the disclosed technology. Referring to FIG. 3, to process payment of a winning bid the PED 310 and the ground server 320 are communicatively coupled and the ground server 320 is further communicatively coupled with payment processors such as banks, card issuers, or other authorized service providers (e.g., applications or services to which the relevant payment information is shared). The payment process can be performed prior to boarding the airplane or even after boarding the airplane in some implementations.

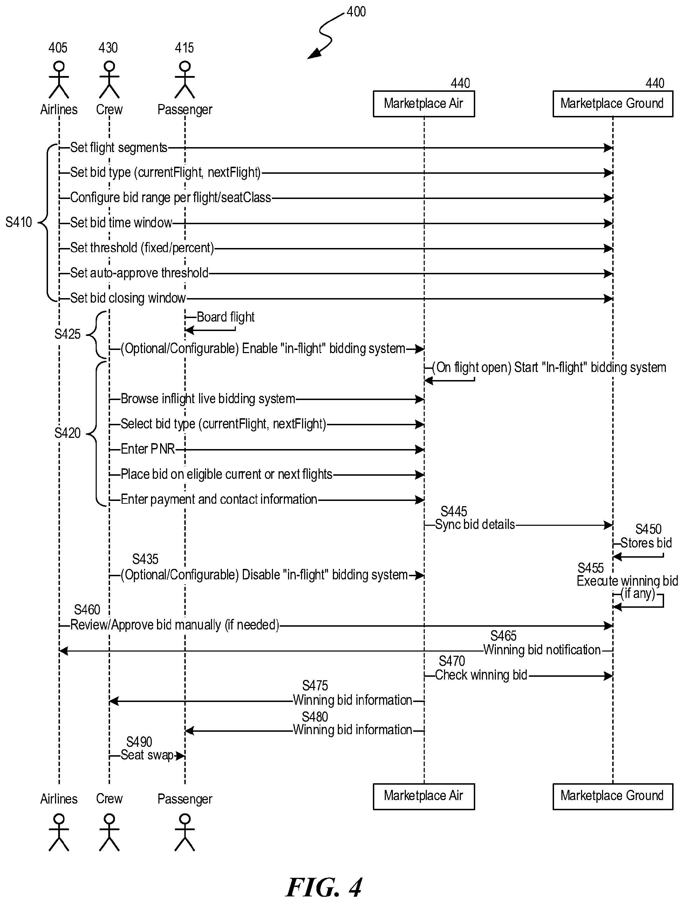

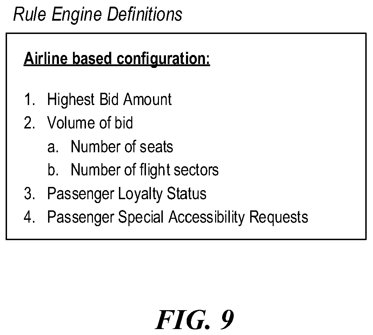

FIG. 4 shows an example workflow to explain an in-flight bidding process based on the disclosed technology. A typical in-flight bidding process begins with the establishment of bidding contents to be offered by the in-flight bidding system and various bidding criteria related to the bidding contents. FIG. 9 shows one example of bidding criteria which can be used to determine a winning bid. At S410 of FIG. 4, the bidding contents and their related criteria are determined by airlines 405 prior to the in-flight bidding system becoming live for bid placements by the passengers 415. For example, bidding contents can be associated with a bid type indicating whether the bidding contents are to be available to a passenger 415 for bidding on their current flight, which may be in progress, or an upcoming flight. Other rules and criteria may include the bid range (e.g., minimum and maximum acceptable bids) on the various bidding contents per flight or flight segment. In addition, bids per flight segment can be accepted or rejected by the in-flight bidding system according to a threshold (e.g., fixed or percentage basis) set by the airlines 405. Example bidding contents may include offerings such as seat assignments or seat upgrades on flights or flight segments that are determined by the airlines 405 as eligible to offer the bidding contents. A flight segment generally corresponds to a single flight which may be taken by a passenger as part of a travel itinerary. In some cases, a travel itinerary may include multiple flights, such as connecting flights for travel to a final destination, in which case flight segments may correspond to the individual flights comprising the multiple flights in the travel itinerary.

The in-flight bidding system can be optionally enabled, at S425, or disabled, at S435, by cabin crew 430. Upon enablement of the in-flight bidding system, the passengers 415, once boarded, are notified of the in-flight bidding system and the bidding contents. Passengers 415 may browse and engage with the in-flight bidding system using a PED or other interactive media device that includes software to support the bidding services. Passengers 415 may provide their identification information (e.g., passenger name record (PNR) information) to the in-flight bidding system to retrieve information about bidding eligibility on their current or next flight. At S420, the in-flight bidding system is opened to receive bids from the passengers 415 on their eligible current or next flight. During S420, the passengers 415, in accordance with their bidding eligibility, may place bids on bidding contents available on eligible current or next flights and select from multiple payment options to make a payment on a bid selection.

The in-flight bidding system is supported by various services including a marketplace bidding service 440 comprising airside and groundside services. The marketplace bidding service 440 is configured to support the in-flight bidding system by periodically syncing details of any bids received by the in-flight bidding system to a groundside server during S445. At S450, any bids received by the groundside server, including the synced bids, may be stored in a database that can be accessed by the groundside server to process bids. At S455, the groundside server determines if any of the bids received by the groundside server can be selected as a winning bid based on airline thresholds. If the groundside server determines to select a winning bid at S455, groundside services may request approval of the selection by the airlines 405 or cabin crew 430 at S460. Upon approval of the selection, passengers 415 may be notified of the winning bid at S465.

If no bid is selected as a winning by the groundside server at S455, an airside server that operates as a part of the airside services may be used to select a winning bid. In some implementations, the airside server may consult the groundside server at S470 to check the winning bid selected by the airside server (e.g., by comparing the winning bid selected by the airside server to bids stored in the database). At S475, winning bid information associated with the winning bid selected by the airside server may be provided by airside services to the cabin crew 430 for review. If the winning bid selected by the airside server is approved by the cabin crew 430 at S475, the passenger associated with the winning bid selected by the airside server is notified at S485 and the cabin crew 430 may assist, at S490, in providing the winning bid contents (e.g., a new seat assignment) to the passenger 415. In some implementations, the airside server retrieves information about winning bids by making an API call to the cabin crew 430.

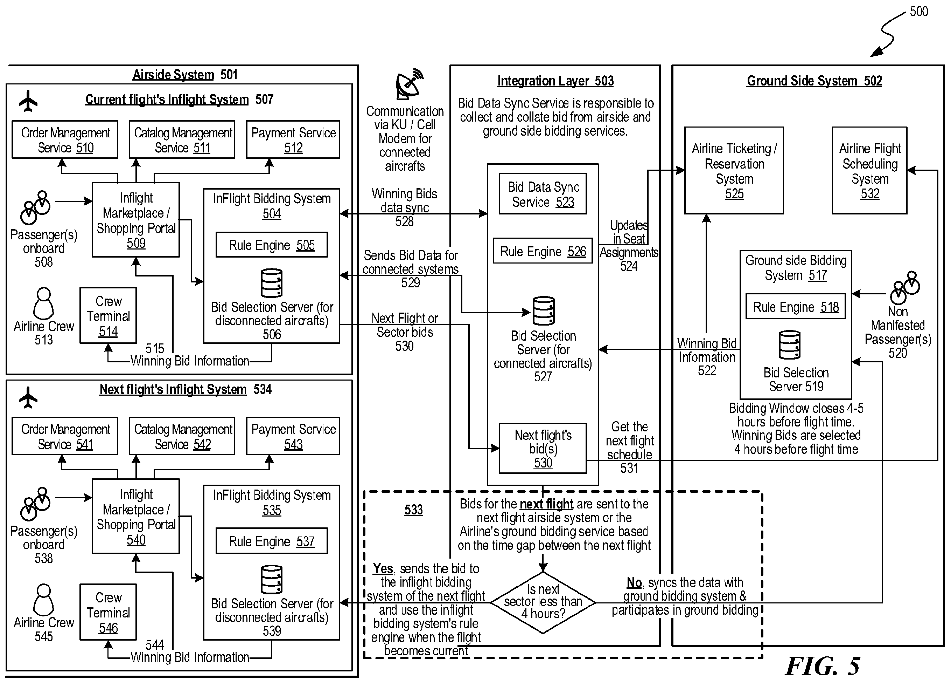

Certain features of the in-flight bidding system are facilitated by the cabin crew 430 via a crew-machine interface (CMI) configured to receive data from the airlines 405 and communicatively coupled to aircraft systems and information streams. For example, the airlines 405 may collect different forms of data, such as unsold or unoccupied seat information, and communicate the data to cabin crew 430 via the CMI. Using the CMI, the cabin crew 430 can set customizable parameters of the in-flight bidding system such as a time window during which bids can be placed (e.g., 20 minutes before departure time), a closing time for placing bids, or a closing time window for placing bids. The cabin crew 430, via the CMI, may enable or disable the in-flight bidding system and control certain functionalities of the in-flight bidding system to passengers 415. The CMI is configured to receive winning bid information selected by the in-flight bidding system, which will be further discussed with regards to FIG. 5. If no winning bid is selected by the in-flight bidding system, the cabin crew 430 may manually select a winning bid based on information received by the CMI. In some implementations, the cabin crew 430 may notify passengers 415 of a winning bid and assist in bidding payment processes.

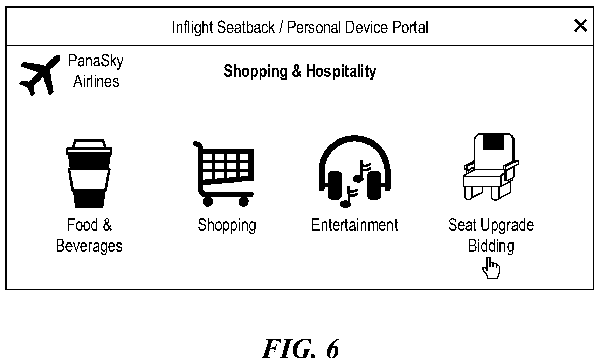

FIG. 5 shows an example architecture of a bidding system based on the disclosed technology. The bidding system 500 comprises an airside system 501 and groundside system 502 which are configured, via the integration layer 503, to transmit and receive different forms of information that support bidding services. The airside system 501 includes an in-flight bidding system 504 comprising a rule engine 505 coupled to a bid selection server 506. The in-flight bidding system 504, rule engine 505, and bid selection server 506 operate as part of the in-flight system 507 of a flight which is current to the passengers 508. The in-flight bidding system 504 is configured to receive bids and associated data (e.g., passenger identification information) through an infight marketplace 509 implemented on PEDs or other interactive media devices that include software applications which support bidding services. FIG. 6 shows an example user interface of the inflight marketplace 509 which includes a variety of shopping and hospitality services in addition to bidding services. The PEDs or interactive media devices may also include software to support additional services provided by the inflight marketplace 509 such as order management services 510, catalog management services 511, and payment services 512. The passengers 508 may engage with the inflight marketplace 509 through PEDs or interactive media devices to place bids on bidding contents. In some implementations, the passengers 508, prior to placing a bid, are required to provide identification information to the inflight marketplace 509 which is used by the inflight bidding system 504 to determine a bidding eligibility for specific passengers 508. The in-flight system 507 may interface with airline crew 513 via a crew terminal 514 which is configured to receive bidding information from the bid selection server 506.

The bid selection server 506 may process received bids in various manners using the rule engine 505. The rule engine 505, to be discussed in further detail with regards to FIG. 9, is used by the bid selection server 506 to determine if a received bid can be accepted, rejected, or selected based on predetermined rules. The bid selection server 506, in accordance with the rule engine 505, may operate to select a winning bid from any accepted bids based on a communication status of the aircraft hosting the in-flight system 507 to ground. In the example of FIG. 5, the communication status of an aircraft or its related systems is considered disconnected when the there is a lack of ground-to-air communications (e.g., via satellite, cell modem, antenna, etc.) which can sometimes occur while an aircraft is in-flight. FIG. 5 shows an example scenario in which the in-flight system 507 is hosted by a disconnected aircraft, in which case the bid selection server 506 selects a winning bid using the rule engine 505 and transmits the winning bid information 515 to the crew terminal 514. Alternatively, in some implementations, the communication status of the aircraft hosting the in-flight system 507 is considered connected (i.e., the aircraft has ground-to-air communication), in which case the bid selection server 506 periodically syncs received bid data with a bid selection server 516 that is configured to process bid data from both the in-flight bidding system 504 and a ground side bidding system 517 to be further discussed in details to follow.

The groundside system 502 includes the groundside bidding system 517 and a rule engine 518 coupled to a bid selection server 519. The groundside bidding system 517 is configured to receive bids and associated data (e.g., identification information) from non-manifested passengers 520 who may engage with the groundside bidding system 517 using a PED or other interactive media device implementing software that supports bidding services provided by the groundside system 502. In the example of FIG. 5, non-manifested passengers 520 correspond to individuals who may bid upon bidding contents offered on flights or flight segments even without having booked travel fare for the flight or flight segment offering the bidding contents. In some implementations, the non-manifested passengers 520 may participate in bidding according to an eligibility that may be determined using identification information provided by the non-manifested passengers 520 to the groundside bidding system 517 via PED or interactive media device.

The groundside bidding system 517 is configured to receive bids from non-manifested passengers 520 within a predetermined bidding window that may be specific to flights or flight segments. The bidding window ends at a predetermined closing time in advance of the departure time of the specific flights or flight segments. Departure times can be obtained by the groundside bidding system 517 from the airline flight scheduling system 521. The bid selection server 519 is operable to select a winning bid prior to the departure times (e.g., several hours in advance) such that the non-manifested passengers 520, if within the bidding window, can bid upon bidding contents offered on an aircraft participating in the airside system 501 prior to the departure of the aircraft. Specifically, the bid selection server 519 is operable to select a winning bid according to the rule engine 518. The rule engine 518 is used by the bid selection server 519 to determine if a bid from the non-manifested passengers 520 can be accepted, rejected, or selected as a winning bid based on predetermined rules. The bid selection server 519, in accordance with the rule engine 518, may select a winning bid from any bids accepted by the bid selection server 519 and communicate the winning bid information 522 to the integration layer 503 for further processing.

The integration layer 503 comprises a bid data sync service 523 which may collect bids and bid data from both the airside bidding systems and the groundside bidding system 517 to obtain synced bid data. The integration layer 503 may also receive updates 524 related to the bidding contents (e.g., seat assignments or availabilities) from the groundside airline ticketing / reservation system 525 and use the updates 524 to facilitate bidding processes within the integration layer 503. The bid data sync service 523 includes a rule engine 526 coupled to the bid selection server 527. When an aircraft offering bidding contents has a connected communication status, the bid selection server 527 will select, according to the rule engine 526, a winning bid from the synced bid data. For example, in some scenarios the aircraft hosting the in-flight bidding system 504 may gain connection to ground (e.g., after landing) and thus gains a connected communication status. In this scenario, the bid data sync service 523 syncs the bid data 528 from the airside with groundside bid data (e.g., winning bid information 522) and the bid selection server 527 selects the winning bid according to predetermined rules from the rule engine 526 and sends the winning bid data 529 to the in-flight bidding system 504. In an alternate scenario, the aircraft has a disconnected communication status and thus the bid selection server 506, rather than the bid selection server 527, selects a winning bid from bids received by the in-flight bidding system 504 according to the rule engine 505. In some implementations, the rule engines 505, 526, and 518 comprise an identical set of rules.

In addition to participating in bidding while onboard their current flight, the passengers 508 have the option to place bids 530 on an upcoming or next flight using the in-flight bidding system 504 while the aircraft hosting the in-flight bidding system 504 is connected to ground. The integration layer 503 is configured to retrieve flights schedules 531 for the upcoming or next flight from the airline flight scheduling system 532. The next flight bids 530 are processed in the integration layer 503 according to timing information that is based on the flight schedules. In the example of FIG. 5, the next flight bids 530 are processed at operation 533 based on a predetermined threshold (e.g., less than 4 hours) between a placement time of the next flight bids 530 and a scheduled time of the next or upcoming flight. The integration layer 503 communicates the next flight bids 530 to either the next flight in-flight system 534 or the groundside system 502 based on the threshold. In some implementations, the bid data sync service 523 will sync bid data from the groundside bidding system 517 to allow for bidding participation from ground and the winning bid may be selected by the bid selection server 527. In some implementations, the bid data sync service will send the bid data directly to the in-flight bidding system 535 of the next or upcoming flight and the bid selection server 536 may select a winning bid according to the rule engine 537.

The in-flight bidding system 535 is configured to also receive bids from the passengers 538 and to accept, reject, or select received bids using the bid selection server 536 and rule engine 537. The in-flight bidding system 535 may receive bids and associated data (e.g., passenger identification information) through the infight marketplace 540 implemented on PEDs or other interactive media devices that include software applications which support bidding services. The PEDs or interactive media devices may also include software to support additional services provided by the inflight marketplace 540 such as order management services 541, catalog management services 542, and payment services 543. Winning bid information 544 may be received by cabin crew 545 via a crew terminal 546, as previously described in connection to the in-flight system 507.

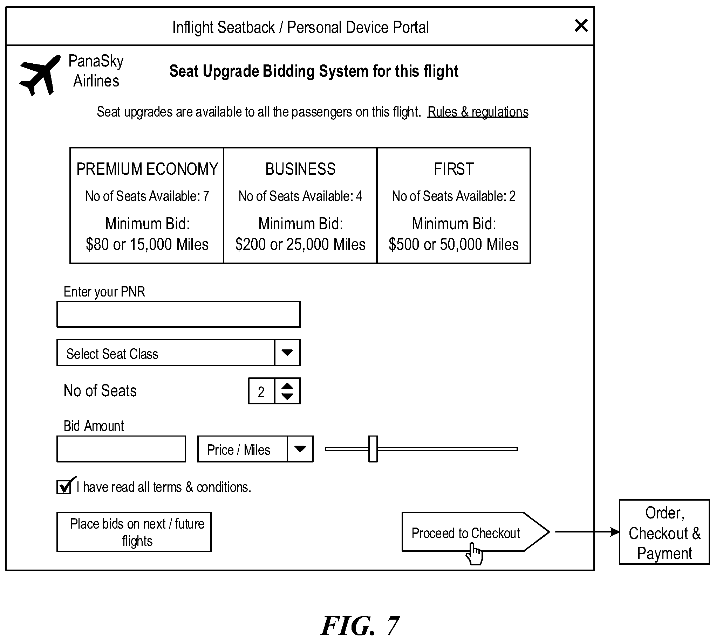

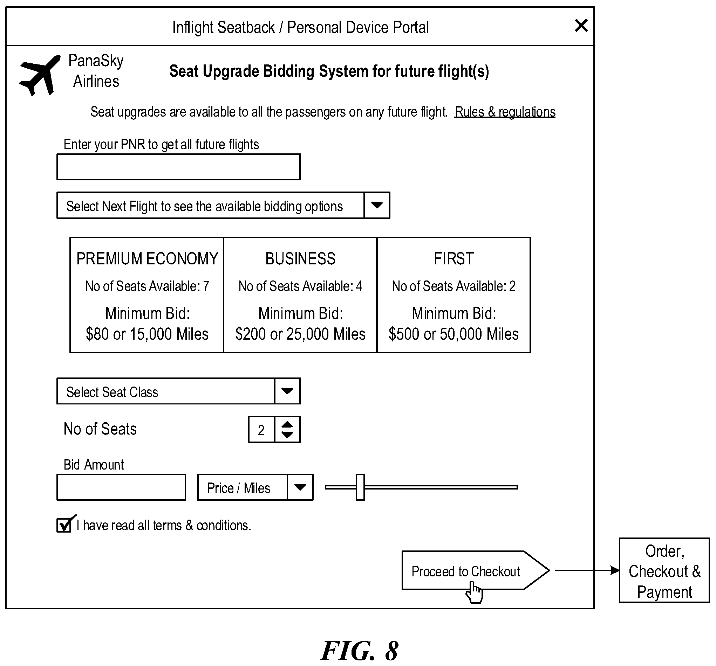

FIGS. 7 and 8 show example user interfaces of the inflight marketplaces 509 and 540, respectively, as implemented on a PED. Users enter their PNR information to obtain their eligible bidding options for current or upcoming flights or flight segments. The user interface displays the number of available seats in a particular seating class as well as the minimum bid requirement, per seating class, which may be specified in terms of price or a number of rewards points. Users may enter their bid amount on a seat or multiple seats in a single bid. As shown in FIG. 7, users implementing the inflight marketplace 509 while onboard their current flight may be presented an additional option (green button) to place bids on upcoming flights based on their PNR information. Selection of this option brings the user to the display screen as shown in FIG. 8. Passengers 508, passengers 538, and non-manifested passengers 520 may be notified of a winning bid via PED or interactive media device. In cases where no winning bid is selected by bid selection servers, manual selection of a winning bid is possible (e.g., by cabin crew using a crew terminal). The inflight marketplaces 509 and 540 also support bidding payment services and users may select from multiple payment options through the user interface.

FIG. 9 shows some example rule engine definitions which may be implemented by rule engines described herein. As shown in FIG. 9, a rule engine may include one or more predetermined rules used to select, accept, or reject bids received by a bidding system according to a highest bid amount or a volume of a bid. In some implementations, the volume of a bid may correspond to a number of bidding contents or a number of flights segments associated with the received bid. The rule engine may also include rules which are based on passenger loyalty status or special accessibility requests. In some implementations, rule engines may be configured by airlines or a provider of the bidding contents. Bidding systems based on the disclosed technology may be designed to operate using one or more rule engines configured with differing predetermined rules. In some implementations, rule engines described in the present patent document may operate to select a winning bid based on passenger information (e.g., passenger loyalty information, date of birth, age, gender, contact, etc.).

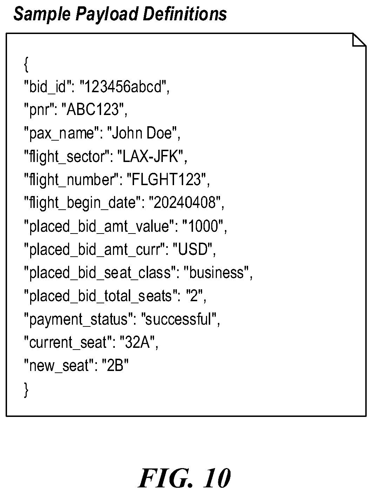

FIG. 10 shows an example of bid data which may be sent or received in bidding systems based on the disclosed techniques. Each bid received by a bidding system may be assigned a bid identification number and may be associated with the identification information of the individual placing the bid (e.g., name or PNR information). Flight information such as destination, flight number, or travel time may be included in the bid data. In some implementations, the flight information may be obtained from the airline ticketing/reservation system 525 or the airline flight scheduling system 532. FIG. 10 shows a particular example in which the bidding contents are seat assignments in a certain seating class on an aircraft and an individual is placing a bid, at a certain dollar price, on multiple seats in the seating class. The bid data may comprise the current seat assignment of the passenger placing the bid as well as any new seat assignment which may be assigned as a result of a winning bid. Some bid data may also include the payment status of a winning bid, which can be paid for using payment processes such as those described in connection to FIG. 3.

In some implementations of bidding services based on the disclosed technology, the marketplace software application supports bidding recommendation features for users accessing the bidding services. For example, an interactive device such as a PED may be used to implement the marketplace software application and to provide a bidding marketplace, such as the inflight marketplaces 509 and 540, to a user of the interactive device. The bidding marketplace may include an option for the user to input, via the interactive device, one or more preferences related to the bidding contents. Based on the user input, the interactive device can present a recommended bid in accordance with the user preference. For example, users seeking to bid upon multiple seats on an airplane may input a preference for the multiple seats to be located next to one another or in a single seating class. A recommended seating arrangement in accordance with the user preference may be provided to the user such that the user may choose to bid upon the recommended seating arrangement. Other bidding recommendations may be provided based on criteria such as passenger preferred travel times, weather conditions, preferred seat assignment (e.g., aisle seating), or bidding activities of other bidders. For instance, in some implementations a suggested bid amount may be recommended to a first bidder based on metrics such as a last received bid by an alternate bidder.

FIG. 11 shows an example of operations of a bidding system based on some implementations of the disclosed technology. Operation 1102 includes displaying biddable contents on user devices including a first user device associated with a passenger located onboard a first commercial passenger vehicle. Operation 1104 includes receiving, by a server in communication with the user devices, data associated with a first bid from the first user device based on bidding contents being offered onboard a second commercial passenger vehicle in which the passenger is scheduled to travel aboard. Operation 1106 includes synchronizing the data associated with the first bid with bid data received by the server from one or more user devices within a predetermined threshold of departure time of the second commercial passenger vehicle, the synchronized bid data including one or more bids from a second user device associated with an individual located outside the first commercial passenger vehicle. Operation 1108 includes determining, by the server using the synchronized bid data, whether to select the first bid as a winning bid based on predetermined rules. Operation 1110 includes transmitting results of the determining to an additional server located onboard the second commercial passenger vehicle such that the bidding contents are provided to the passenger, the individual located outside the first commercial passenger vehicle, or a traveler located onboard the second commercial passenger vehicle. In some embodiments, the additional server is configured to determine to select the winning bid based on the predetermined rules in the event the additional server lacks communication with the server.

FIG. 12 shows another example of operations of a bidding system based on some implementations of the disclosed technology. Operation 1202 includes receiving, by a first server, bids and associated information from user devices based on bidding contents displayed by the user devices, the user devices including a first user device associated with a first bid by a passenger on the commercial passenger vehicle. Operation 1204 includes processing, by a second server coupled to the first server, the bids from the user devices based on a communication status of the commercial passenger vehicle, the communication status determining, in part, which of the bids from the user devices are to be included in the processing. Operation 1206 includes determining, by the second server, whether to accept or reject the bids from the user devices based on predetermined rules. Operation 1208 includes selecting the first bid associated with the first user device or any bid accepted by the second server, including a second bid by a non-passenger on the commercial passenger vehicle that is received by the first server from a second user device within a predetermined time window, as a winning bid based on the predetermined rules. Operation 1210 includes providing, in response to the selecting, information associated with the winning bid to the first server such that results of the selecting are distributed to the passenger or the non-passenger.

This patent document describes the exemplary bidding systems in the context of a commercial passenger vehicle such as an airplane for ease of description. The exemplary vehicle entertainment systems could be employed in other types of commercial passenger vehicles such as a train, a ship, or a bus. In some implementations of the disclosed technology, bidding contents may include contents such as concert tickets, game tickets, theme park tickets, or another commodity, good, service or experience.

One of skill in the art will appreciate that the present document discloses techniques including a bidding service to individuals traveling or seeking travel in a commercial passenger vehicle. Some implementations of the disclosed technology allow bidding participation from travelers who have not yet purchased travel fare on the commercial passenger vehicle offering the bidding contents. In some implementations of the disclosed technology, bidding can take place while the commercial passenger vehicle is already en route to a destination or after the commercial passenger vehicle has boarded. Various implementations of the disclosed technology relate to providing a bidding service to increase customer interaction and generate revenue for commercial travel companies.

In this document the term "exemplary" is used to mean "an example of a and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this patent document.

## Claims

1. A system for providing bidding services to travelers on a commercial passenger vehicle, the system comprising:
a first server configured to receive bids and associated information from user devices based on bidding contents displayed by the user devices, the user devices including a first user device associated with a first bid by a passenger on the commercial passenger vehicle;
a second server coupled to the first server and configured to control processing of bids from the user devices based on a communication status of the commercial passenger vehicle, the communication status determining, in part, which bids from the user devices are to be included in the processing, and
wherein the second server is further configured to:
determine whether to accept or reject bids from the user devices based on predetermined rules;
select the first bid associated with the first user device or any bid accepted by the second server, including a second bid by a non-passenger on the commercial passenger vehicle that is accepted by the second server and received by the first server from a second user device within a predetermined time window, as a winning bid based on the predetermined rules; and
provide, in response to the selecting, information associated with the winning bid to the first server such that results of the selecting are distributed to the passenger or the non-passenger.

2. The system of claim 1, wherein the associated information includes identification information of the passenger that is used by the first server to retrieve a travel itinerary of the passenger, wherein alternate bidding contents are available to be bid upon by the passenger via the first user device based on the travel itinerary.

3. The system of claim 2, wherein the first server is further configured to:
receive, from the first device, an additional bid by the passenger based on the alternate bidding contents and the second server is configured to provide the additional bid to another server located outside the commercial passenger vehicle.

4. The system of claim 1, wherein the first server, in response to a lack of communication to the second server, is further configured to select the winning bid from the received bids based on predetermined rules, wherein the predetermined rules relate to one or more of a bid amount, a bid volume, a passenger loyalty status, or a passenger special accessibility request.

5. The system of claim 1, wherein the user devices are configured to present a recommended bid to a user based on input received by the user device, wherein the input relates to one or more preferences of the user regarding a preferred seating assignment, a preferred seating class, or a preferred arrangement of multiple seating assignments located in one or more seating classes.

6. The system of claim 1, wherein the second server is further configured to receive additional bids, within the predetermined time window, from user devices associated with additional non-passengers and include the additional bids in the processing, wherein the predetermined time window corresponds to an amount of time before departure time of the commercial passenger vehicle.

7. The system of claim 1, wherein the user devices include personal electronic devices or interactive media devices with a display portion that is located behind a headrest of a seat in the commercial passenger vehicle, wherein payment of the winning bid is facilitated by the user devices.

8. The system of claim 1, wherein the second bid is placed by the non-passenger from the second user device at a time at which the non-passenger has not purchased travel fare aboard the commercial passenger vehicle.

9. A method for providing bidding services to travelers on a commercial passenger vehicle, the method comprising:
receiving, by a first server, bids and associated information from user devices based on bidding contents displayed by the user devices, the user devices including a first user device associated with a first bid by a passenger on the commercial passenger vehicle;
processing, by a second server coupled to the first server, the bids from the user devices based on a communication status of the commercial passenger vehicle, the communication status determining, in part, which of the bids from the user devices are to be included in the processing;
determining, by the second server, whether to accept or reject the bids from the user devices based on predetermined rules;
selecting the first bid associated with the first user device or any bid accepted by the second server, including a second bid by a non-passenger on the commercial passenger vehicle that is received by the first server from a second user device within a predetermined time window, as a winning bid based on the predetermined rules; and
providing, in response to the selecting, information associated with the winning bid to the first server such that results of the selecting are distributed to the passenger or the non-passenger.

10. The method of claim 9, further comprising:
providing, upon validation of the results of the selecting, the bidding contents to the passenger, the non-passenger, or an additional traveler associated with a third bid accepted by the second server.

11. The method of claim 9, wherein the bidding contents are seating assignments onboard an alternate commercial passenger vehicle.

12. The method of claim 11, wherein the first server is located onboard the alternate commercial passenger vehicle and the first bid is made by the passenger, prior to departure of the alternate commercial passenger vehicle, while the passenger is located onboard the commercial passenger vehicle.

13. The method of claim 9, wherein identification information received by the user devices as input from respective users is used to determine eligibility of the users to participate in bidding.

14. The method of claim 9, wherein the communication status indicates a connectivity between the first server and the second server via cellular modem or antenna.

15. The method of claim 9, wherein the users devices are configured to display one or more recommended bids to users in response to user input relating to one or more of a preferred seating assignment onboard the commercial passenger vehicle, a preferred seating class onboard the commercial passenger vehicle, a preferred arrangement of multiple seating assignments located in one or more seating classes onboard the commercial passenger vehicle, a preferred travel time, or an activity of other users participating in bidding.
